# EUROPEAN PATENT SPECIFICATION

(11) **EP 1 890 306 B1**
(45) Date of publication and mention of the grant of the patent: **08.12.2010**
(21) Application number: 07113726.9
(22) Date of filing: 02.08.2007
(51) Int. Cl.: H01G 5/04, H01G 5/18

(54) **MEMS Variable capacitor and method for producing same**
Variabler MEMS-Kondensator und Verfahren zu seiner Herstellung
Condensateur variable à MEMS et son procédé de fabrication

(30) Priority: 18.08.2006 US 838768 P; 14.02.2007 EP 07102351
(43) Date of publication of application: 20.02.2008
(73) Proprietor: IMEC, 3001 Leuven (BE)
(72) Inventor: Rottenberg, Xavier, B-1030, Schaarbeek (BE)
(74) Representative: Sarlet, Steven Renaat Irène

(56) References cited:
- EP-A- 1 536 439
- WO-A-01/45127
- WO-A-97/01221
- WO-A-02/079076
- WO-A-2004/080886
- US-A1- 2005 013 087
- US-B1- 6 290 510
- US-B1- 6 625 004
- US-B1- 6 906 905

## Description

### Field of the invention

The present invention relates to the field of Micro Electromechanical system (MEMS) devices. It relates to electrostatic MEMS devices as variable capacitor devices and a method for producing them.

### State of art

Different electrostatic actuators are known.

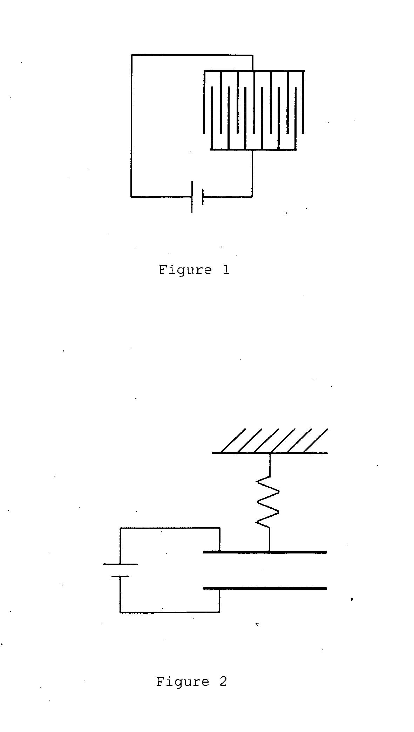

Comb-drive structures as an electrostatic actuator are known [Sterken T. et al., An electret-based electrostatic micro-generator, Proceedings of Transducers, The 12th International Conference on Solid State Sensors, Actuators and Microsystems, 8-12 June 2003, Boston, USA, IEEE 2003, p.1291-1294.]. This type of devices requires thick films or armatures and is therefore often realized by bulk processing, i.e. patterning the bulk of the substrate and using itself as a moving part of the device. Upon application of a bias voltage between the electrodes (fingers), the sets of inter-digitated fingers, shown e.g. in fig.1, shift into each other. The movement uses the single degree of freedom available to the system, i.e. the direction of the fingers; in other words the devices move in-plane.

Parallel-plate capacitors as an electrostatic actuator are also known [X. Rottenberg et al., RF-MEMS technology platform for agile mobile and satellite communications, Proc. of the 36th European Microwave Conf., pp. 1723-1726, September 2006]. This type of devices is often preferred for on-chip actuators as they only require in principle a few additional thin-film processing steps. This type of structures is indeed produced by a typical 4-mask process flow realized on top of a dielectric (insulated) substrate. Upon actuation, the movable plate or electrode gets nearer to the fixed, bottom electrode one; the device moves out-of-plane as shown e.g. in fig.2, whereby the movable electrode approaches the bottom electrode. The electrodes remain in different planes.

Examples of electrostatic devices (sensors and actuators) are RF-MEMS switches, switchable capacitors, tilting mirrors, power scavengers, accelerometers ... etc. These prior art devices have the problem that integration of a 4-masks process in/or above another process is rather difficult. Moreover the dielectric layer is typically sensitive to various charging mechanisms. The release process also has a strong impact on the dielectric properties. Often malfunction of clamped-free devices occurs due to the stress-gradient in the armature.

A three-dimensional variable capacitor is described in US-patent 2005/6906905. The electrodes of the capacitor are formed in an interdigitated manner with movable MEMS comb drive electrode beams. Control or actuation electrodes on the beams drive their motion either individually or all in unison, leading to changes in the capacitance. The structure of this variable capacitor is very complex.

### Aim of the invention

It is an aim of this invention to provide a variable capacitor which shows a less complex structure and which is as a result easier to manufacture.

It is further an aim of this invention to provide a simple method for producing a variable capacitor.

These aims are achieved by the variable capacitor and the method of the independent claims.

### Summary of the invention

A variable capacitor comprises first and second electrically conductive electrodes and a support structure. The first and second electrodes are arranged above the support structure, defining the capacitance of the capacitor. The first and second electrodes are positioned such with respect to each other, that their orthogonal projections on the plane of the support structure do not overlap. At least one of said electrodes comprises at least one bendable portion. The bendable portions are movable perpendicular to the support structure. The variable capacitor further comprises an actuation means for actuating each bendable portion to vary the capacitance of said variable capacitor. The actuation means comprises a means for generating a DC voltage difference between said electrodes.

The variable capacitor of the present invention uses fringing fields as actuation mechanism. Upon actuation, each of said bendable portions of the electrodes will move in order to maximise the capacitance while minimising its energy.

An analysis of the problem of the prior art variable capacitor has shown that the structure is very complex in view of the fact that actuation of the motion of the movable comb is driven by extra actuation electrodes. In the variable capacitor of the present invention, no extra actuation electrodes need to be implemented, since the bendable portions which are part of the capacitor electrodes are used themselves for actuation. The same elements of the variable capacitor are used for actuation and for controlling the capacitance, simplifying the structure severely while maintaining a device which has a large capacitance ratio or tuning range. Because of the simplified structure, the device can be produced in a simple 2-mask process. The simplicity allows a vast flexibility for the processing and as a result strongly eases the integration of such devices into existing technologies.

In a preferred embodiment, the actuation means further comprises a layer within said support structure (103) having a higher permittivity value than the atmosphere surrounding said electrodes. The proximity of this layer in the support structure with its higher permittivity produces an unbalance in the electric field distribution between top and bottom faces of the electrodes. Upon actuation with an increasing voltage, the unbalance results in a net force, towards the high permittivity support structure. The bendable portions configure such that they are pulled towards the support structure. Again, to maximise the capacitance while minimising its energy, the electrodes may come into physical contact with the support structure.

Preferably, the electrodes are arranged essentially in the same plane, while the bendable portions are laying out of that plane in idle state, due to their residual stress gradient. To maximise the capacitance upon actuation, the bendable portions configure such that they are positioned essentially in said plane.

Preferably, each of the electrodes comprises at least one bendable portion. The bendable portions are preferably formed by cantilevered structures, having an anchored portion and a free-standing portion.

The electrodes preferably comprise patterned metal layers. The electrodes may further be formed out of the same layer.

In another embodiment, the electrodes comprise sub layers. These sub layers can be made for example of metal, dielectric or piezoelectric. In the case of piezoelectric, piezoelectric actuation can be used in combination with the fringing fields actuation mechanism of the present invention. Piezoelectric actuation could for example be used in a first stage of the actuation for bringing the electrodes closer to each other or to the support structure, easing further actuation. The electrodes can also be patterned in order to for example stiffen the electrodes and/or tune their spring constant.

In another embodiment, one of said electrodes is completely fixed on said support structure. In this embodiment, the actuation mechanism will be dominated by the fringing fields' actuation. This has the advantage of lowering the required actuation voltage.

In an alternative embodiment, the support structure is provided with recesses arranged for accepting the bendable portions when actuated. This would allow for example the definition of variable capacitor with fixed stable actuated state without contact with the substrate and the production of large amplitude rotary device with large excursion within the substrate.

In a preferred embodiment, the electrodes are digitated structures, and are arranged such that upon actuation they configure as an interdigitated structure. As the actuation of the device preferably occurs through the fringing fields, maximizing these is favourable. Interdigitated fingers are most prompt to this actuation principle we use.

In a preferred embodiment, the length of said digitated structures is varied, so that a more progressive tuning can be achieved.

The support structure may comprise only the high permittivity layer, or be a multilayer structure. The substrate can be for example a dielectric or a stack of dielectrics like for example a glass, quartz, sapphire, diamond, soda lime, Pyrex, ... wafer coated with for example 200nm thick sputtered Ta₂O₅ (εᵣ=25) or 5µm thick BCB (εᵣ=2.7) . Also;
a) a laminate or PCB, composed of one or more layers of for example FR4, LCP or Rogers materials
b) a complex multilayer stack like MCM-D, HTCC, LTCC interconnect substrates comprising patterned conductive layers.

In an alternative embodiment, the support structure comprises an MCM-D substrate.

In other embodiments, a number of variable capacitor based RF devices and circuits are presented. Possible examples are an LC-tank, a relay, a shunt relay capacitor and a series relay capacitor. All applications comprise said variable capacitor. The variable capacitor as described in the present invention can also be used as or in a sensor.

A second aspect of the present invention presents a method for the production of a variable capacitor. A method for the production in a 2-mask process of a variable capacitor comprising the steps of:
a. providing a sacrificial layer on a support substrate;
b. producing a conductive layer on said sacrificial layer in a predetermined plane;
c. patterning said conductive layer so as to define first and second electrodes of said variable capacitor, at least one of which comprises at least one bendable portion; and
d. releasing said at least one bendable portion by local removal of said sacrificial layer, whereby said bendable portion or portions curl out of the plane of said conductive layer.

In an embodiment, the method of patterning the conductive layer further results in the first electrode and the second electrode being interdigitated structures.

In an embodiment, the method further comprises of the step of providing recesses in the support substrate, the recesses being arranged for accepting the bendable portions when actuated.

### Brief description of the drawings

These and other features, aspects and advantages of the present invention will become better understood with regard to the following description, appended claims, and accompanying drawings here.

Fig.1 shows a comb-driven electrostatic device.

Fig.2 shows a parallel-plate electrostatic device.

Fig.3 shows a block diagram of the variable capacitor of the present invention.

Fig.4 shows the top view and cross sections of an interdigitated structure according to the present invention.

Fig.5 shows schematic the out-of-plane-to-in-plane electrostatic actuation.

Fig.6 shows the realized device in its (a) idle and (b) actuated states.

Fig.7 shows schematic the free-standing-to-contacted electrostatic actuation.

Fig.8 shows an interdigitated example of the present invention in its (a) idle and (b) actuated states.

Fig.9 shows a typical C-V characteristic of an actuated device.

Fig. 10 shows the cross section of the standard device and its asymmetric embodiment.

Fig.11 shows a basic process flow.

Fig.12 shows a comparison of the measured C-V characteristics of the standard device and its asymmetric embodiment.

Fig.13 shows some plots of the measured S-parameters of the standard device and its asymmetric embodiment.

Fig.14 show a top view microphotograph of a shunt of Electrostatic Fringing Field Actuator (EFFA) RF capacitor.

Fig.15 shows a plot of the measured S₂₁ of an EFFA.

Fig.16 shows a plot of the C-V characteristics of an EFFA..

Fig.17 shows top view microphotograph of a series EFFA RF capacitor with additional anchoring at the tips of the fingers.

Fig.18 shows a plot of the measured C-V of EFFA.

Fig.19 shows a microphotograph of a processed series LC-tank implementing a fixed spiral inductor and a series EFFA capacitors.

Fig.20 shows a tunable LC-tank with a variable length series EFFA.

Fig.21 shows schematic side- and top-views of a shunt relay. On the left: conventional parallel-plate actuator, on the right: EFFA.

Fig.22 shows a shunt switchable capacitor actuated as a relay by EFFA's beside the signal line.

Fig.23 shows a series switchable capacitor actuated as a relay by 2 transverse EFFA's.

Fig.24 shows a shunt capacitive relay implementing 4 EFFA's as side-actuators.

Fig.25 shows a possible alternative process flow.

Fig.26 shows a 3D-visualization of a basic variable capacitor.

Fig.27 shows a 3D-visualization of an asymmetric variable capacitor.

Fig.28 shows a 3D-visualization of a variable capacitor implementing bridges.

Fig.29 shows a 3D-visualization of a variable capacitor with locally thickened moving electrodes.

Fig.30 shows a 3D-visualization of a variable capacitor moving in an underlying cavity.

Fig.31 shows a 3D-visualization of a variable capacitor moving in an underlying cavity.

Fig.32 shows a 3D-visualization of a variable capacitor with a fixed thick electrode.

Fig.33 shows the electric field distribution in the cross section of a unit periodic cell.

Fig.34 shows a 3D-visualization of a variable capacitor.

Fig.35 shows the electric field distribution in the cross section of a unit periodic cell.

### Detailed description of the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes.

Furthermore, the terms first, second, third and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

Moreover, the terms top, bottom, over, under and the like in the description and the claims are used for descriptive purposes and not necessarily for describing relative positions. It is to be understood that the terms so used are interchangeable under appropriate circumstances and that the embodiments of the invention described herein are capable of operation in other orientations than described or illustrated herein.

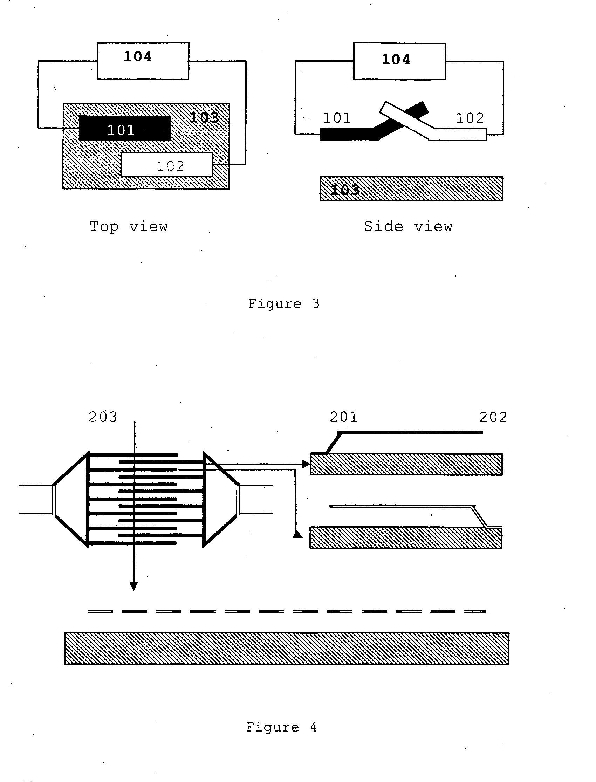

The present invention is illustrated in fig.3. A first (101) and a second (102) electrically conductive electrode, spaced apart from each other, define the capacitance of a capacitor. At least one electrode is arranged such that a portion of the electrode is bendable. The electrodes are arranged in such a way above a support structure (103) that they have non-overlapping orthogonal projections on the plane of the support structure. The bendable portions are movable in a direction perpendicular to the support structure and not in a direction parallel to this support structure. Further, the present invention comprises an actuation means for actuating the bendable portion to vary the capacitance of the variable capacitor. The actuation means comprises a means (104) for generating a voltage difference between the conductive electrodes.

In a preferred embodiment, this support structure (103) is typically a substrate with a permittivity value higher than the atmosphere surrounding the electrodes.

In another embodiment, each of the electrodes comprises at least one of the bendable portions. The electrodes are arranged essentially in the same plane, while the bendable portions are laying out of that plane due to their residual stress gradient. Upon actuation, a voltage difference is generated between the electrodes and the bendable portions align.

In an embodiment, the bendable portions are cantilevered structures, having an anchored portion (201) and a free-standing portion (202).

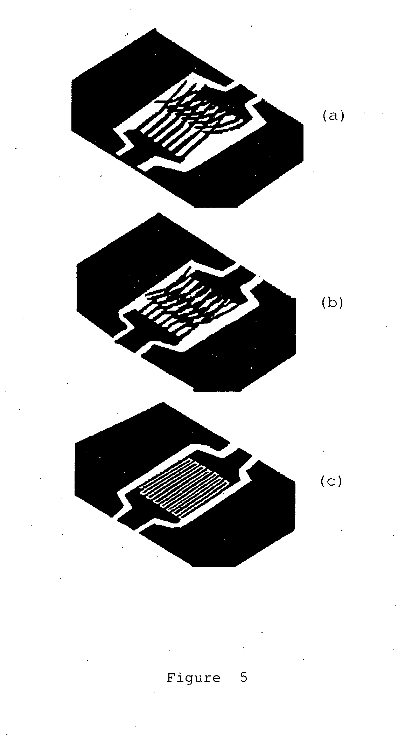

Embodiments according to the present invention are shown in Fig.4. They comprise two sets of movable interdigitated fingers (203) free-standing above the substrate. There is no electrode underneath the fingers. In the idle state, the beams curl out-of-plane as shown in fig.5(a) due to their residual stress gradient, lowering the rest capacitance between the fingers.

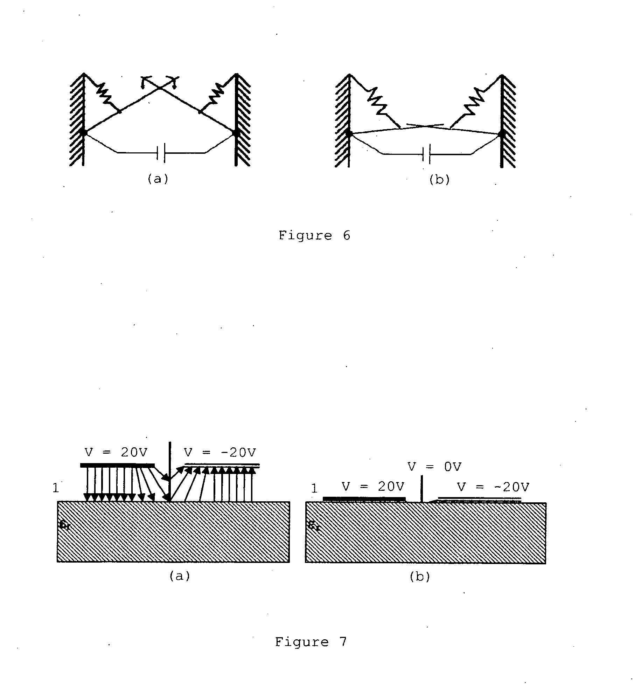

An aspect of the embodiments according to the present invention is the alignment of the fingers. A DC-voltage (104) applied between the 2 electrodes produces fringing fields that result in opposite torques working on both sets of fingers as shown in fig.6(a). These tend to align (fig.6(b)) the fingers parallel to each other. This is sketched in fig.6, where straight rigid conductors rotating around their fixed anchors symbolise the fingers. The springs account for the stiffness of the fingers. The uncurling is depicted in fig.5(a) to fig.5(c). By aligning, the fingers maximise their total capacitance.

Another aspect of the embodiments according to the present invention describes a second actuation principle. The support structure has a higher permittivity value than the surrounding atmosphere as e.g. vacuum, air, gases, oil or other fluids. The proximity to the substrate with εᵣ>1 produces an unbalance of the E-field distribution between top and bottom faces of the fingers. Fig.7 shows a cell of the periodic cross-section through the width of the fingers. Because of the symmetry induced by the periodic arrangement of the fingers, an equipotential plane occupies the centre of each slot (fig.7(a)). The total force on each finger is vertical that tends to get both families of fingers to contact the substrate. The fields are mainly directed towards the dielectric substrate due to its high relative permittivity εᵣ. As a result, the capacitance is increased, while remaining aligned to each other (fig.7(b)). (Note that the external fingers differ from the others by the non-symmetry of the lateral force they are subject to. For the proper actuation of these fingers, the design relies on the lateral rigidity of the thin film cantilever beams.)

The fringing-fields actuation principle that has been demonstrated can be used also as an electrostatic sensing mechanism.

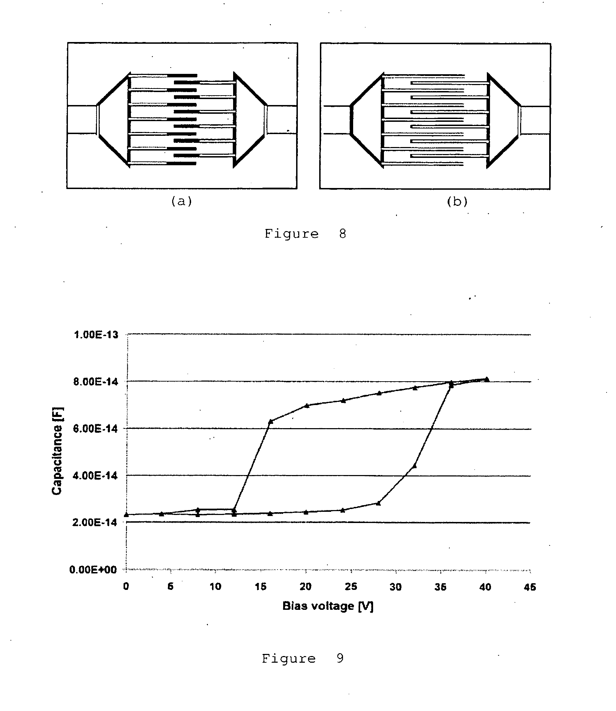

The idle and actuated states of the device are shown in fig.8. In the idle-state, the tips of the fingers appear dark as they do not reflect the light towards the microscope (fig.8(a)). These are the areas of maximum deflection. Upon actuation, the fingers flatten on the surface of the substrate and appear uniformly shiny (fig.8(b)). The corresponding C-V characteristic is shown in fig.9.

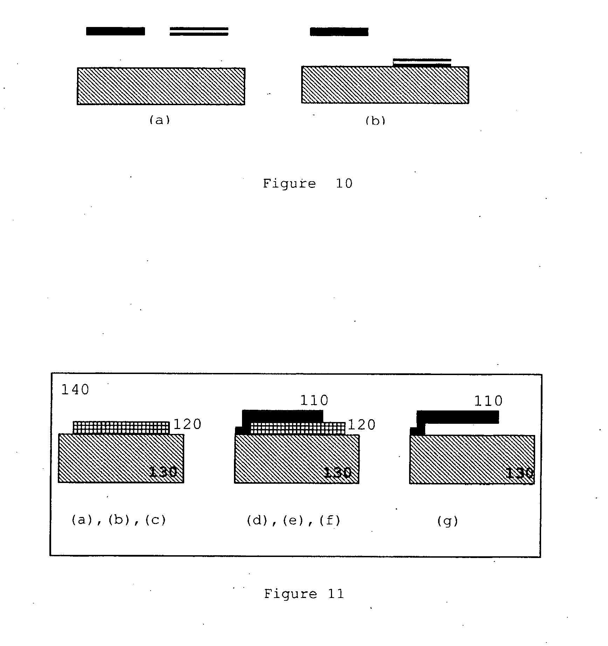

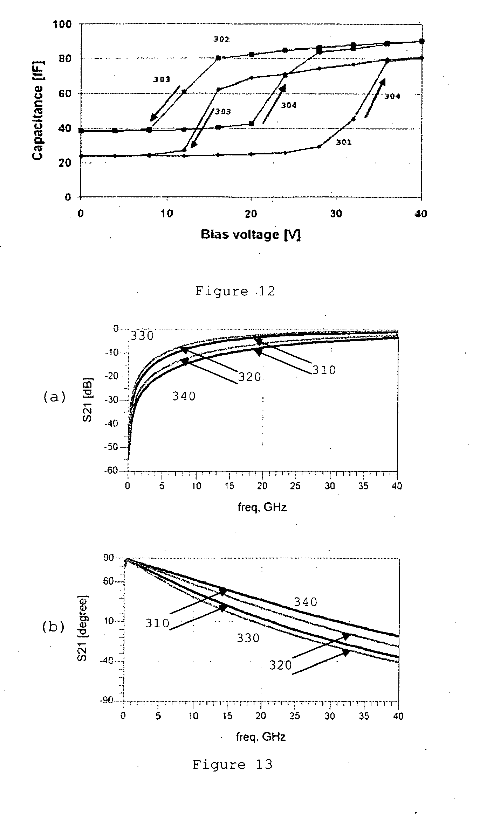

In embodiments according to the present invention, a modified structure has been realized in a similar process flow, where one family of fingers was completely fixed and produced in contact with the substrate (the difference being illustrated in fig.10(a) shows the symmetric embodiment, fig.10(b) shows the asymmetric embodiment). The corresponding C-V characteristic is shown in fig.12. Line (301), respectively (302) represents the C-V characteristic of the symmetric embodiment, respectively the asymmetric embodiment. The capacitance increases with increasing bias voltage. At the moment the electrodes come in contact with the substrate, "pull-in", the capacitance increases faster (304). Reversely, the capacitance decreases slowly with a decreasing voltage. At the "pull-out" instance, the capacitance drops (303). At least the following effects can be seen for the asymmetric embodiment, which are illustrated in fig.12:
- Lowering of the actuation voltage.
- Increase of the idle-capacitance.
- Increase of the actuated-capacitance.

The measured transmission parameter, i.e. S₂₁ of both the symmetric (310) and the asymmetric (320) devices in rest (340) and in actuated (330) states are plotted in fig.13. Fig.13(a) shows the amplitudes and fig . 13 (b) the phase of the measured transmission parameter. These characteristics are typical transmission parameters of series capacitances and demonstrate the possibility to use these devices for RF applications in wide frequency ranges.

In alternative embodiments, further modifications of the capacitance ratio can be realized by changing for instance (1) the design, e.g. the length/width/spacing of the fingers,(2) the substrate, the layered substrate, and (3) the ambiance or environment, the gas/fluid, e.g. oil.

Interdigitated devices are not really needed. In an aspect of the invention the essence is to use the fact that the fringing fields go through the dielectric or insulated substrate for the actuation.

Cantilever beams are also not really needed. A foot may be for example placed at the end of the beams, hereby creating bridge-type structures in order not to rely on the reproducibility of the stress gradient in the beams. In the idle state the beams will not curl out of plane.

Embodiments according to the present invention have the advantage that they can essentially be produced by a two mask process (a. sacrificial layer (120) and b. movable and/or fixed electrode (130)). A single metal layer and mask can be used for forming the capacitor electrodes. Moreover no dielectric layer is necessary except for the one to insulate the substrate.

An example of process flow (140) according to embodiments of the present invention is described below and represented in fig.11:
a) A glass wafer (130) 650micron thick AF45 with εᵣ=5.9 was cleaned and covered with photoresist (120) by spinning. The target photoresist thickness was 3micron. This layer was used as sacrificial layer.
b) The photoresist (120) was exposed according to a predefined pattern (using a mask in an aligner).
c) The photoresist (120) was developed and then cured (baked) in order to ensure its stability for the further step.
d) A uniform layer of Al-based alloy (110), 1micron thick, was sputtered on the wafer (130).
e) A second photoresist was spun on top of the Al layer and patterned as described for the first one in b) and c) .
f) The Al layer (110) was wet etched to define the electrodes of the device.
g) Finally, the structures were released through a O₂-based plasma etch (dry etching) of the photoresist layers (120).
Additional steps may be implemented like beforehand patterning a 1micron thick Al layer on top of the glass substrate or coating it with 200nm thick sputtered Ta₂O₅ (εᵣ=25) or 5micron thick BCB (εᵣ=2,7)

The present invention can be implemented to obtain a novel electrostatic actuator. This actuator uses fringing fields as actuation mechanism, Electrostatic Fringing Field Actuator, EFFA. This new technology is demonstrated by producing and characterising tuneable RF-MEMS devices and circuits in various technological implementations of remarkable simplicity. This simplicity allows a vast flexibility for the processing and as a result strongly eases the integration of the EFFA's into key existing technologies.

The Electrostatic Fringing-Field Actuators (EFFA) used as variable capacitors have been demonstrated in various embodiments.

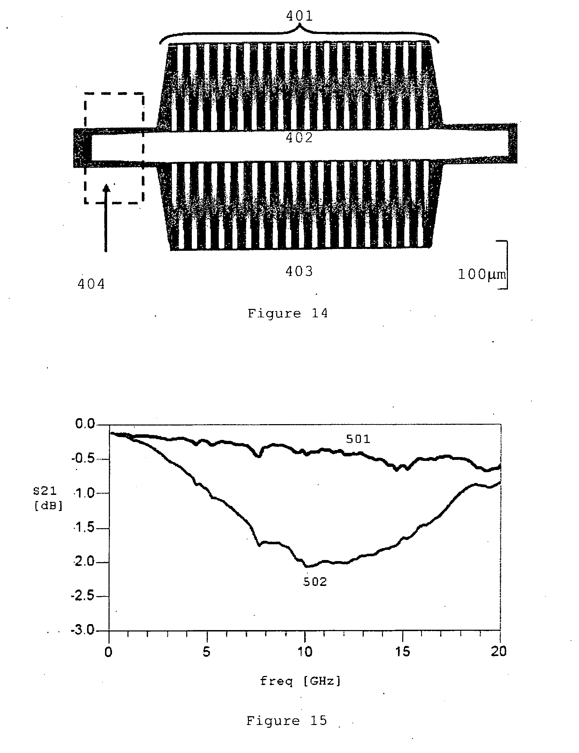

Fig.14 shows a microphotograph of a shunt EFFA-based capacitor for RF-applications. (401) represents an interdigitated EFFA capacitor, (402) is the RF signal line, (403) is the RF ground plane and (404) shows the RF probing area. Its measured S₂₁ is plotted in fig.15, for the idle-state (501) and the actuated state (502).

In one embodiment, the EFFA variable capacitors have been accommodated for RF-measurement using a second metallisation.

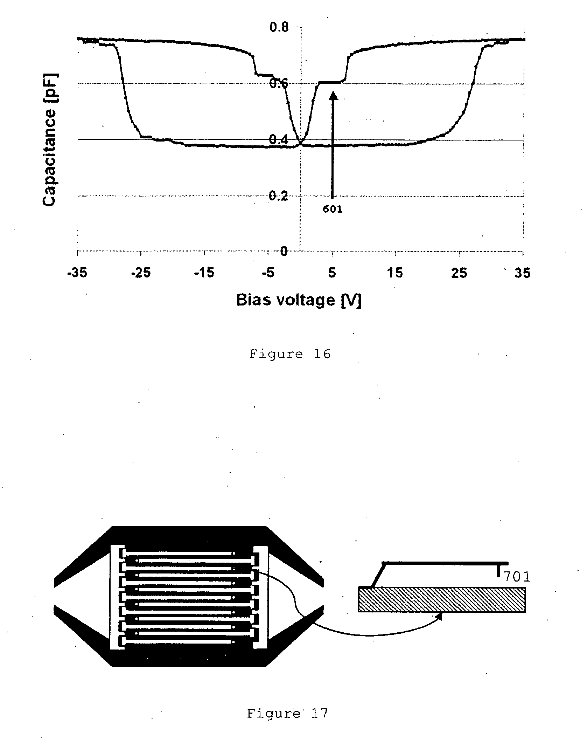

In another embodiment, the variable capacitor was also implemented following the basic process flow with one metallisation only, defining the RF access in the same layer as the movable electrodes as shown in fig.14. Further, the same device was processed on top of a 5micron thick BCB (benzocyclobutene) layer coating the basic glass wafer. With a low relative permittivity (εᵣ=2.7), BCB produces a mild unbalance of the E-field and an inefficient actuation. As a result, a stable partially-open state (601) appears in the C-V characteristic, see fig. 16. In this state, the fingers loosen their contact with the BCB but remain down due to the torque they apply on each other.

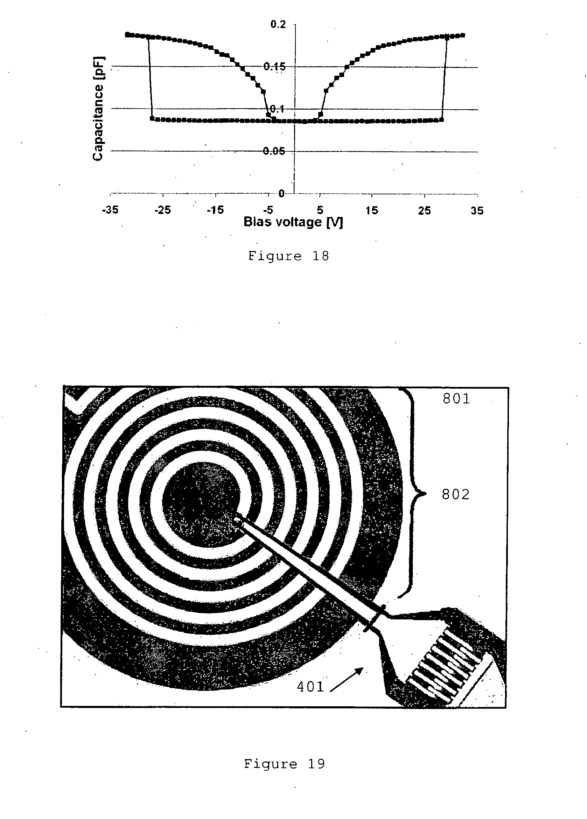

In another embodiment, floating anchors (701) at the tips of the fingers are added, as shown in fig. 17. These floating anchors mitigate the effect of the stress gradient on the free-standing beams. The sole possible actuation results then from the unbalance of the E-field. The capacitance contrast between idle and actuated states is only due to the contact with the substrate. Processed on a glass substrate coated with a 200nm thick sputtered Ta₂O₅ layer, εᵣ=25, the capacitance ratio still reaches 1:2 as shown in fig.18. It can be tuned by adapting the design, e.g. spacing between the fingers, or the technology, e.g. thickness of the dielectric coating.

In another embodiment, the implementation of a second metallization is described. It allows defining the underpass of spiral inductors (802) used in tuneable LC-tanks (801) shown in fig.19.

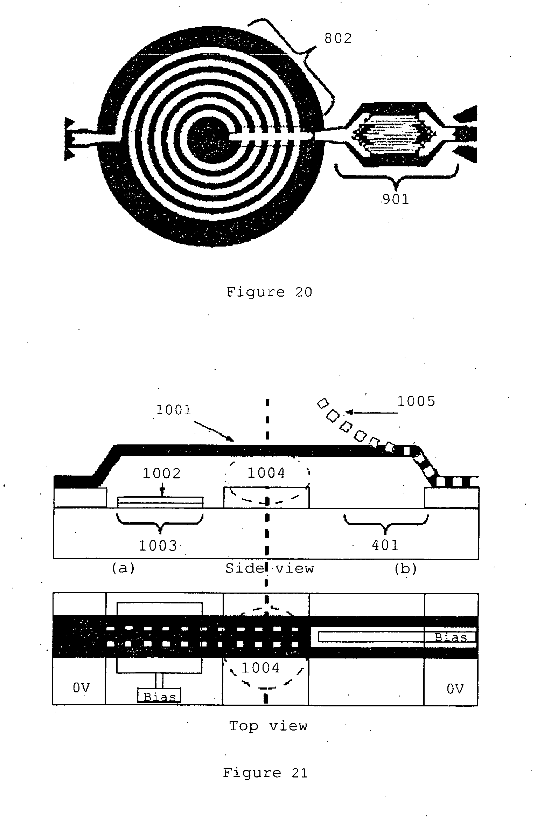

In a slightly different embodiment, a variable LC-tank with variable length series EFFA (901) is presented, see fig.20. The length of the fingers was varied within the same EFFA to allow a progressive frequency tuning and not only a switching.

Relay devices, separating DC- and RF-signals, are key elements to solve the problems of bias distribution throughout complex RF-MEMS circuits. Parallel-plate capacitors (1003) can be implemented as EFFA-based relays to define either ohmic relays or high capacitance ratio relays. A conventional implementation of an electrostatic relay is depicted in fig.21(a). A parallel-plate actuator (1003) with a fixed electrode (1002) is defined under a grounded bridge (1001), away from the central RF-contact (1004) area. The RF-contact (1004) closes. The fixed electrode (1002) is coated to prevent any DC-short during the actuation.

On fig.21(b), the parallel-plate actuator (1003) is replaced by an EFFA (401). The RF-structure is anchored through 2 grounded legs interdigitated with an actuation finger (1005), e.g. clamped-free in this case. Upon actuation of a bias to the hot finger (1005), the legs and hot finger contact in the substrate, closing as a result the RF-contact (1004).

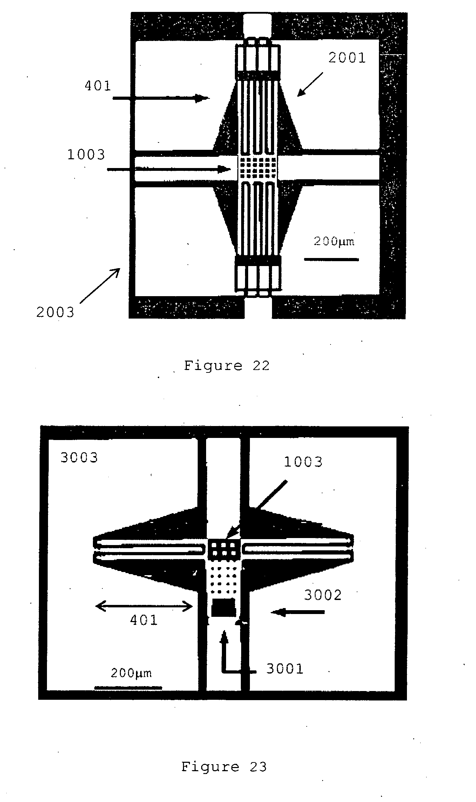

An example of a shunt relay is depicted in fig.22 A moving electrode overlaps with the signal line of a CPW. It is in this case anchored in the ground through 4 legs interdigitated with 3 actuation fingers (2001) biased through 1 separate DC pad (2003). The DC voltage drop between top and bottom electrodes of the RF capacitor is nil. In down-state, the device defines a capacitance limited by the native AlOₓ thickness and the contact quality between the electrodes. The measured capacitance ratio of this device is reached 1:7.

In a comparable way, a series tuneable capacitor (3003) can be designed, fig. 23. A cantilever beam (3002) anchored (3001) at the bottom in one part of a CPW overlaps with another CPW at the top. Transverse restraining bridges at the tip of the cantilever lower the impact of the stress gradient on the idle-capacitance definition. They further allow designing 2 transverse EFFA's (401) with the addition of actuation fingers. In the present case, RF-grounded beams interdigitated with the transverse beams are used. At low frequency, the EFFA capacitance is small enough to isolate the signal line from the ground planes while providing an efficient actuation mechanism. The device is thus actuated by biasing both signal lines versus the ground planes. It is thus not a relay in the sense that DC- and RF-signals are superposed but well in the sense that the actuation is separated from the sensing, i.e. the RF-functionality.

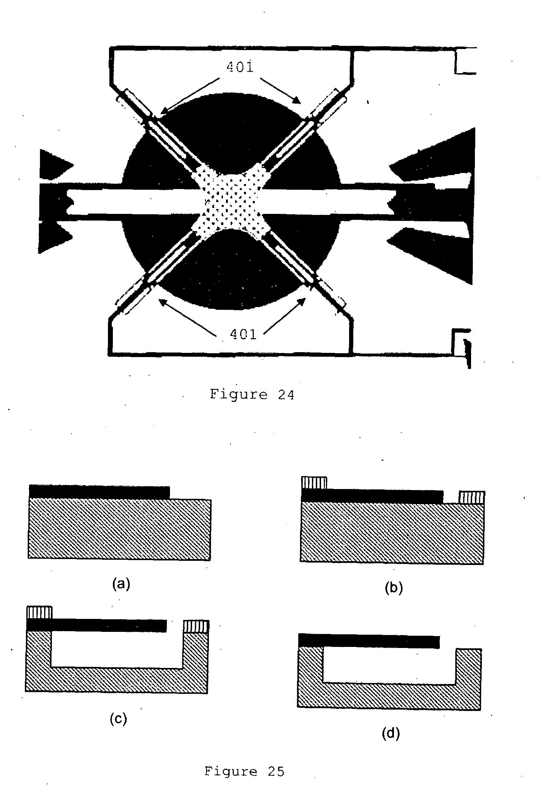

A shunt capacitive relay can be based on the design of the device of fig.22, see fig. 24. It is designed to present shunt switching characteristics, e.g. low insertion loss in idle-state and high isolation in actuated-state. The large top electrode is spun between 4 double legs constituting the grounded parts of 4 EFFA's (401). The hot fingers of the actuators are either clamped-free beams or fixed stripes processed in contact with the substrate to lower the actuation voltage.

Of course, the processing steps used and described previously are only indicative. The sputtering of the Al layer can be replaced for example by the plating of another metal while polyimide, along with a wide variety of other materials, can be used as a sacrificial layer.

Another interesting basic process flow can nevertheless be presented that would use the same principle layout as the process flow already presented:
a) A metal layer is deposited and patterned on top of a glass substrate, e.g. plated Cu.
b) The anchored portions of the device are protected for example using a polyimide layer.
c) The glass is wet etched using the patterned metal and deposited polyimide as mask. The non-protected metal patterns are so released.
d) A O₂-based plasma etch (dry etch) of the photoresist layer finally cleans the device.
Fig.25 presents schematically the 4-steps alternative process flow. Note that the positive stress gradient was named as it commonly occurs in thin film MEMS processing. It is indeed often preferable that the deflection of the device is directed away from the substrate. The variable capacitors we describe would nevertheless be fully functional curling downwards, even touching partially underlying layers.

A number of alternative embodiments concerning the EFFA design are presented.

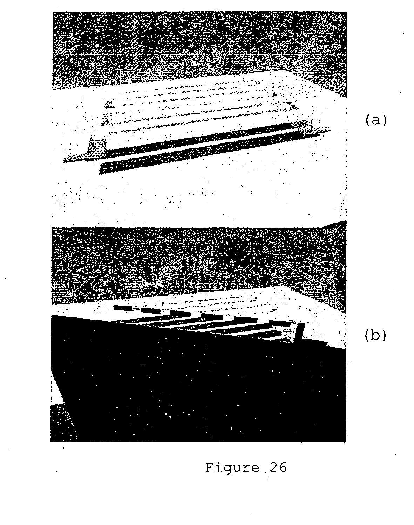

The basic embodiment is presented in fig.26

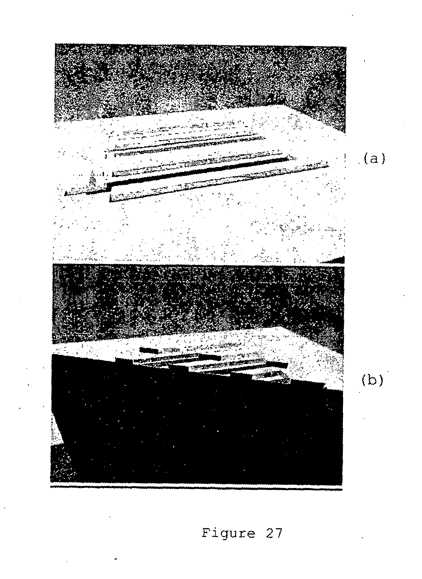

The asymmetric embodiment is presented in fig.27 where the finger set on the right lies on the substrate.

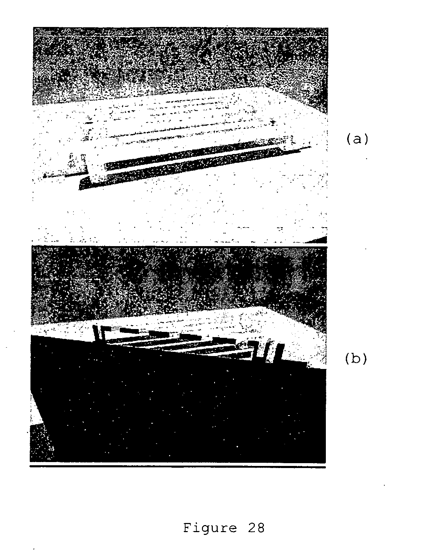

The implementation of using bridges instead of cantilever beams as shown in is further sketched in fig.28.

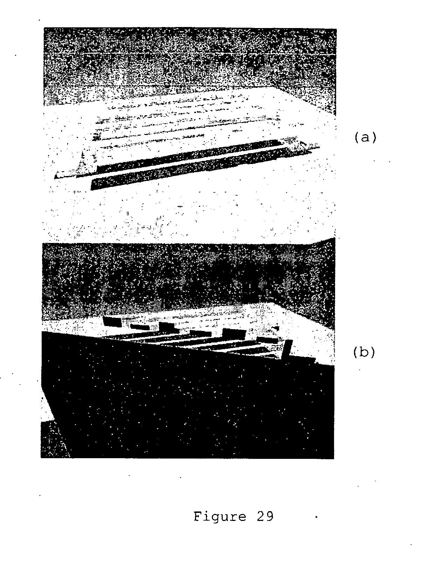

To modify the C-V characteristics further than using the shapes of the electrodes, e.g. spacing, length, pattern, ..., the device can be uniformly or locally stiffened by thickening the electrodes. This is sketched in fig.29.

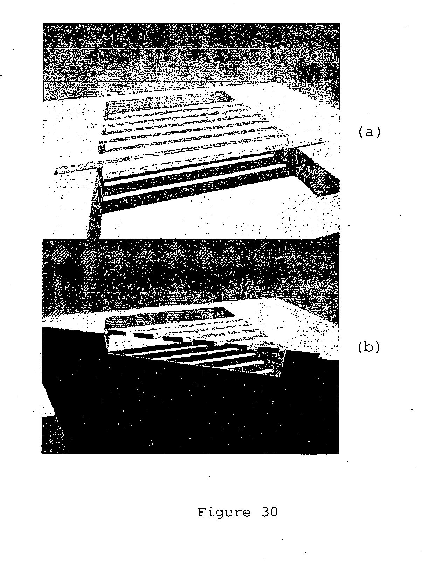

A further embodiment is presented in fig.30 where the fingers move downwards in an underlying cavity.

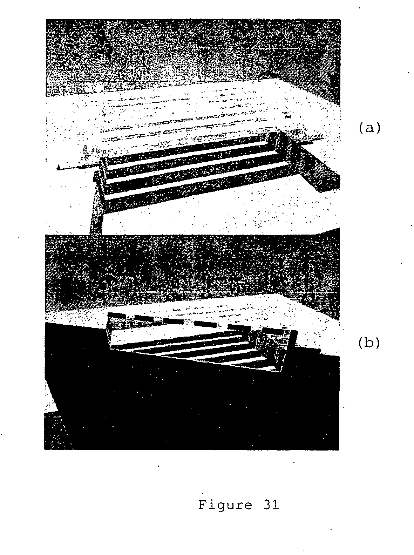

In fig.31 the fingers were processed on the substrate before etching the cavity. They are therefore perfectly flat.

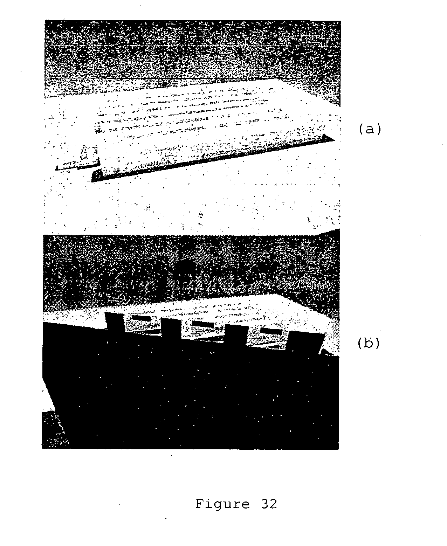

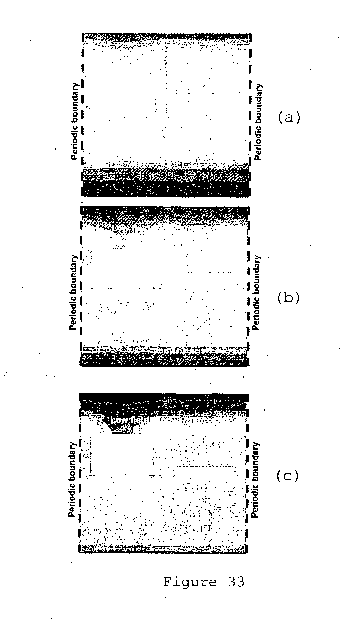

In a further embodiment presented in fig.32 one electrode or set of fingers is made thicker than the other and processed directly on the substrate. This modifies the evolution of the capacitance and electrostatic force on the moving electrode during its displacement as sketched in fig.33 Depending on the thickness of the electrodes, the relative permittivity of the substrate and the design parameters, like the spacing between the fingers, a stable actuated state can be produced without contacting the substrate.

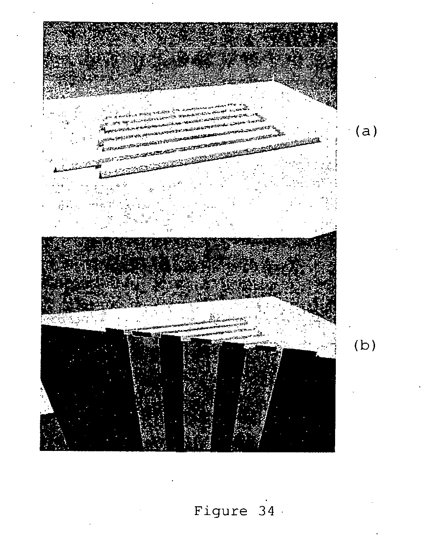

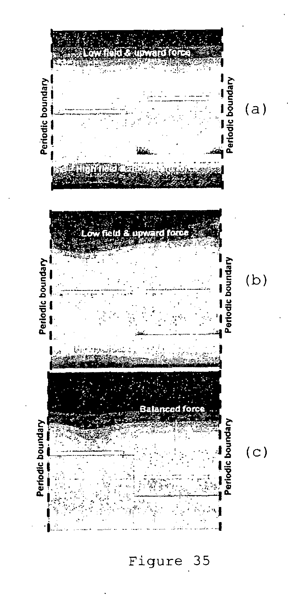

The same results can be obtained with electrodes of equal thicknesses by producing for example substrate cavities under portions of the electrodes as shown in fig.34. Fig.35 shows the evolution of the electric field distribution around the electrodes in this case during the displacement of the moving portions.

## Claims

1. A variable capacitor comprising:
- a support structure (103) above which first (101) and second (102) electrically conductive electrodes are arranged, said electrodes defining the capacitance of said capacitor and being arranged such with respect to each other that orthogonal projections of said electrodes on the plane of said support structure (103) are non-overlapping;
- at least one of said electrodes comprising at least one bendable portion being movable perpendicular to said support structure (103), and
- an actuation means for actuating each of said bendable portions to vary the capacitance of said variable capacitor,
**characterised in that** said actuation means comprises a means (104) for generating a voltage difference between said electrodes.

2. A variable capacitor according to claim 1, **characterised in that** said actuation means further comprises a layer within said support structure (103) having a higher permittivity value than the atmosphere surrounding said electrodes.

3. A variable capacitor according to any of the previous claims, **characterised in that** said electrodes are arranged essentially in the same plane, with said bendable portions laying out of said plane in idle state, and **in that** upon actuation with a predetermined first voltage, said bendable portions configure such that they are positioned essentially in said plane.

4. A variable capacitor according to any of the previous claims, **characterised in that** each of said electrodes comprises at least one of said bendable portions.

5. A variable capacitor according to claim 2, 3 or 4, **characterised in that** upon actuation with a predetermined second voltage said bendable portions configure such that they are pulled towards said support structure (103).

6. A variable capacitor according to claim 5, **characterised in that** upon actuation with said second voltage said bendable portions come into physical contact with said support structure (103).

7. A variable capacitor according to any of the previous claims, **characterised in that** said bendable portions are cantilevered structures, having an anchored portion (201) and a free-standing portion (202).

8. A variable capacitor according to any of the previous claims **characterised in that** said electrodes comprise patterned metal layers.

9. A variable capacitor according to any of the previous claims **characterised in that** said electrodes are formed out of the same layer.

10. A variable capacitor according to any of the previous claims, **characterised in that** said electrodes comprise one or more sub layers.

11. A variable capacitor according to claim 10, **characterised in that** one of said sublayers is a piezoelectric layer for enabling piezoelectric actuation in a first actuation stage.

12. A variable capacitor according to any of claims 1 to 4 or 7 to 11, **characterised in that** one of said electrodes is completely fixed on said support structure.

13. A variable capacitor according to any of the previous claims, **characterised in that** said support structure (103) is provided with recesses arranged for accepting said bendable portions when actuated.

14. A variable capacitor according to any of the previous claims **characterised in that** said electrodes are digitated structures (203), and are arranged such that upon actuation they configure as an interdigitated structure (203).

15. A variable capacitor according to claim 14, **characterised in that** the length of said digitated structures is varied.

16. A variable capacitor according to any of the previous claims **characterised in that** said support structure (103) is a multilayer structure.

17. A variable capacitor according to claim 16, **characterised in that** said support structure (103) comprises an MCM-D substrate.

18. A device comprising said variable capacitor according to any of the previous claims.

19. A device according to claim 18, said device being an LC-tank (801).

20. A device according to claim 18, said device being a relay.

21. A device according to claim 18, said device being a shunt relay capacitor (2003).

22. A device according to claim 18, said device being a series relay capacitor (3003).

23. A method for the production in a 2-mask process of a variable capacitor (140) comprising the steps of:
a. providing a sacrificial layer (120) on a support substrate (130);
b. producing a conductive layer (110) on said sacrificial layer (120) in a predetermined plane;
c. patterning said conductive layer (110) so as to define first and second electrodes of said variable capacitor, at least one of which comprises at least one bendable portion; and
d. releasing said at least one bendable portion by local removal of said sacrificial layer (120), whereby said bendable portion or portions curl out of the plane of said conductive layer.

24. A method according to claim 23, **characterised in that** the step of patterning said conductive layer (110) results in said first electrode and said second electrode being interdigitated structures.

25. A method according to any of claims 23 to 24, further comprising the step of providing recesses in said support substrate (130), said recesses being arranged for accepting said bendable portions when actuated.

## Patentansprüche

1. Regelbarer Kondensator, umfassend:
- eine Stützstruktur (103), oberhalb welcher erste (101) und zweite (102) elektrisch leitende Elektroden angeordnet sind, die die Kapazitanz des Kondensators definieren und die derart mit Bezug zueinander angeordnet sind, dass orthogonale Vorsprünge der Elektroden auf der Ebene der Stützstruktur (103) sich nicht überlappen;
- wobei mindestens eine der Elektroden mindestens einen biegbaren Abschnitt umfasst, der senkrecht zur Stützstruktur (103) beweglich ist, und
- ein Stellmittel zum Ansteuern jedes der biegbaren Abschnitte, um die Kapazitanz des regelbaren Kondensators zu verändern; **dadurch gekennzeichnet, dass** das Stellmittel ein Mittel (104) zum Erzeugen einer Spannungsdifferenz zwischen den Elektroden umfasst.

2. Regelbarer Kondensator nach Anspruch 1, **dadurch gekennzeichnet, dass** das Stellmittel ferner eine Schicht innerhalb der Stützstruktur (103) umfasst, die einen höheren Permittivitätswert als die die Elektroden umgebende Atmosphäre aufweist.

3. Regelbarer Kondensator nach einem der vorhergehenden Ansprüche, **dadurch gekennzeichnet, dass** die Elektroden im Wesentlichen in der gleichen Ebene angeordnet sind, wobei die biegbaren Abschnitte im Ruhezustand aus dieser Ebene herausstehen, und dass sie sich nach Ansteuern mit einer vorherbestimmten ersten Spannung derart einstellen, dass sie im Wesentlichen in dieser Ebene positioniert sind.

4. Regelbarer Kondensator nach einem der vorhergehenden Ansprüche, **dadurch gekennzeichnet, dass** jede der Elektroden mindestens einen der biegbaren Abschnitte umfasst.

5. Regelbarer Kondensator nach Anspruch 2, 3 oder 4, **dadurch gekennzeichnet, dass** bei Ansteuern mit einer vorherbestimmten zweiten Spannung die biegbaren Abschnitte sich derart einstellen, dass sie gegen die Stützstruktur (103) gezogen werden.

6. Regelbarer Kondensator nach Anspruch 5, **dadurch gekennzeichnet, dass** bei Ansteuern mit der zweiten Spannung die biegbaren Abschnitte in physikalischen Kontakt mit der Stützstruktur (103) kommen.

7. Regelbarer Kondensator nach einem der vorhergehenden Ansprüche, **dadurch gekennzeichnet, dass** die biegbaren Abschnitte freitragende Strukturen sind, die einen verankerten Abschnitt (201) und einen freistehenden Abschnitt (202) aufweisen.

8. Regelbarer Kondensator nach einem der vorhergehenden Ansprüche, **dadurch gekennzeichnet, dass** die Elektroden strukturierte Metallschichten umfassen.

9. Regelbarer Kondensator nach einem der vorhergehenden Ansprüche, **dadurch gekennzeichnet, dass** die Elektroden aus der gleichen Schicht geformt sind.

10. Regelbarer Kondensator nach einem der vorhergehenden Ansprüche, **dadurch gekennzeichnet, dass** die Elektroden eine oder mehrere Unterschichten umfassen.

11. Regelbarer Kondensator nach Anspruch 10, **dadurch gekennzeichnet, dass** eine der Unterschichten eine piezoelektrische Schicht ist, die piezoelektrisches Ansteuern in einer ersten Ansteuerstufe ermöglicht.

12. Regelbarer Kondensator nach einem der Ansprüche 1 bis 4 oder 7 bis 11, **dadurch gekennzeichnet, dass** eine der Elektroden vollständig an der Stützstruktur fixiert ist.

13. Regelbarer Kondensator nach einem der vorhergehenden Ansprüche, **dadurch gekennzeichnet, dass** die Stützstruktur (103) mit Ausnehmungen versehen ist, die eingerichtet sind, die biegbaren Abschnitte aufzunehmen, wenn sie angesteuert werden.

14. Regelbarer Kondensator nach einem der vorhergehenden Ansprüche, **dadurch gekennzeichnet, dass** die Elektroden fingerförmige Strukturen (203) sind, die derart angeordnet sind, dass sie, wenn sie angesteuert werden, eine fingerförmig ineinandergreifende Struktur (203) darstellen.

15. Regelbarer Kondensator nach Anspruch 14, **dadurch gekennzeichnet, dass** die Länge der fingerförmigen Strukturen unterschiedlich ist.

16. Regelbarer Kondensator nach einem der vorhergehenden Ansprüche, **dadurch gekennzeichnet, dass** die Stützstruktur (103) eine Mehrschichtstruktur ist.

17. Regelbarer Kondensator nach Anspruch 16, **dadurch gekennzeichnet, dass** die Stützstruktur (103) ein MCM-D Substrat umfasst.

18. Vorrichtung, umfassend den regelbarer Kondensator nach einem der vorhergehenden Ansprüche.

19. Vorrichtung nach Anspruch 18, welche Vorrichtung ein LC-Tank (801) ist.

20. Vorrichtung nach Anspruch 18, welche Vorrichtung ein Relais ist.

21. Vorrichtung nach Anspruch 18, welche Vorrichtung ein Kondensator mit Nebenschlussrelais (2003) ist.

22. Vorrichtung nach Anspruch 18, welche Vorrichtung ein Kondensator mit in Reihe geschaltetem Relais (3003) ist.

23. Verfahren zur Herstellung eines regelbaren Kondensators (140) in einem 2-Masken-Prozess, umfassend folgende Schritte:
a.Bereitstellen einer Opferschicht (120) auf einem Stützsubstrat (130);
b.Herstellen einer leitenden Schicht (110) auf der Opferschicht (120) in einer vorherbestimmten Ebene;
c.Strukturieren der leitenden Schicht (110), um erste und zweite Elektroden des regelbaren Kondensators zu definieren, von denen mindestens eine mindestens einen biegbaren Abschnitt umfasst; und
d.Freigeben des mindestens einen biegbaren Abschnitts durch örtliches Entfernen der Opferschicht (120), wobei sich der oder die biegbaren Abschnitte aus der Ebene der leitenden Schicht herauswinden.

24. Verfahren nach Anspruch 23, **dadurch gekennzeichnet, dass** der Schritt des Strukturierens der leitenden Schicht (110) dazu führt, dass sich aus der ersten und zweiten Elektrode fingerförmig ineinandergreifende Strukturen ergeben.

25. Verfahren nach einem der Ansprüche 23 bis 24, ferner umfassend den Schritt des Bereitstellens von Ausnehmungen in der Stützstruktur (130), die eingerichtet sind, die biegbaren Abschnitte aufzunehmen, wenn sie angesteuert werden.

## Revendications

1. Condensateur variable comprenant :
- une structure de support (103) au-dessus de laquelle des première (101) et deuxième (102) électrodes électriquement conductrices sont disposées, lesdites électrodes définissant la capacitance dudit condensateur et étant disposées l'une par rapport à l'autre de telle manière que des projections orthogonales desdites électrodes sur le plan de ladite structure de support (103) ne se recouvrent pas ;
- au moins une desdites électrodes comprenant au moins une partie pliante pouvant être déplacée perpendiculairement à ladite structure de support (103), et
- un moyen d'actionnement pour actionner chacune desdites parties pliantes pour varier la capacitance dudit condensateur variable, **caractérisé en ce que** ledit moyen d'actionnement comprend un moyen (104) pour générer une différence de tension entre lesdites électrodes.

2. Condensateur variable selon la revendication 1, **caractérisé en ce que** ledit moyen d'actionnement comprend en outre une couche à l'intérieur de ladite structure de support (103) ayant une valeur de permittivité plus élevée que l'atmosphère entourant lesdites électrodes.

3. Condensateur variable selon l'une quelconque des revendications précédentes, **caractérisé en ce que** lesdites électrodes sont disposées essentiellement dans le même plan, lesdites parties pliantes étant situées en dehors dudit plan à l'état de repos, et **en ce que** lors de l'actionnement avec une première tension prédéterminée, lesdites parties pliantes se configurent de manière à être positionnées essentiellement dans ledit plan.

4. Condensateur variable selon l'une quelconque des revendications précédentes, **caractérisé en ce que** chacune desdites électrodes comprend au moins une desdites parties pliantes.

5. Condensateur variable selon la revendication 2, 3 ou 4, **caractérisé en ce que** lors de l'actionnement avec une deuxième tension prédéterminée, lesdites parties pliantes se configurent de manière à être tirées vers ladite structure de support (103).

6. Condensateur variable selon la revendication 5, **caractérisé en ce que** lors de l'actionnement avec une deuxième tension prédéterminée, lesdites parties pliantes entrent en contact physique avec ladite structure de support (103).

7. Condensateur variable selon l'une quelconque des revendications précédentes, **caractérisé en ce que** lesdites parties pliantes sont des structures de type cantilever, ayant une partie ancrée (201) et une partie indépendante (202).

8. Condensateur variable selon l'une quelconque des revendications précédentes, **caractérisé en ce que** lesdites électrodes comprennent des couches métalliques à motif.

9. Condensateur variable selon l'une quelconque des revendications précédentes, **caractérisé en ce que** lesdites électrodes sont formées à partir de la même couche.

10. Condensateur variable selon l'une quelconque des revendications précédentes, **caractérisé en ce que** lesdites électrodes comprennent une ou plusieurs sous-couches.

11. Condensateur variable selon la revendication 10, **caractérisé en ce qu'**une desdites sous-couches est une couche piézoélectrique destinée à permettre un actionnement piézoélectrique lors d'une première étape d'actionnement.

12. Condensateur variable selon l'une quelconque des revendications 1 à 4 ou 7 à 11, **caractérisé en ce qu'**une desdites électrodes est complètement fixée sur ladite structure de support.

13. Condensateur variable selon l'une quelconque des revendications précédentes, **caractérisé en ce que** ladite structure de support (103) est pourvue d'évidements agencés pour accepter lesdites parties pliantes quand elles sont actionnées.

14. Condensateur variable selon l'une quelconque des revendications précédentes, **caractérisé en ce que** lesdites électrodes sont des structures digitées (203) et sont disposées de telle manière que lors de l'actionnement elles se configurent comme une structure digitée (203).

15. Condensateur variable selon la revendication 14, **caractérisé en ce que** la longueur desdites structures digitées est variée.

16. Condensateur variable selon l'une quelconque des revendications précédentes, **caractérisé en ce que** ladite structure de support (103) est une structure multicouche.

17. Condensateur variable selon la revendication 16, **caractérisé en ce que** ladite structure de support (103) comprend un substrat MCM-D.

18. Dispositif comprenant ledit condensateur variable selon l'une quelconque des revendications.

19. Dispositif selon la revendication 18, ledit dispositif étant un circuit résonant LC (801).

20. Dispositif selon la revendication 18, ledit dispositif étant un relais.

21. Dispositif selon la revendication 18, ledit dispositif étant un condensateur à relais en dérivation (2003).

22. Dispositif selon la revendication 18, ledit dispositif étant un condensateur à relais en série (3003).

23. Procédé pour la production dans le cadre d'un processus à 2 masques d'un condensateur variable (140) comprenant les étapes consistant à :
a. prévoir une couche sacrificielle (120) sur un substrat de support (130) ;
b. produire une couche conductrice (110) sur ladite couche sacrificielle (120) dans un plan prédéterminé ;
c. donner un motif à ladite couche conductrice (110) afin de définir des première et deuxième électrodes dudit condensateur variable, dont au moins une comprend au moins une partie pliante ; et
c. libérer ladite au moins une partie pliante par élimination locale de ladite couche sacrificielle (120), à la suite de quoi ladite ou lesdites parties pliantes se courbent et sortent du plan de ladite couche conductrice.

24. Procédé selon la revendication 23, **caractérisé en ce que** l'étape consistant à donner un motif à ladite couche conductrice (110) a pour résultat que ladite première et ladite deuxième électrode sont des structures interdigitées.

25. Procédé selon l'une quelconque des revendications 23 à 24, comprenant en outre l'étape consistant à prévoir des évidements dans ledit substrat de support (130), lesdits évidements étant agencés pour accepter lesdites parties pliantes quand elles sont actionnées.
